# EUROPEAN PATENT APPLICATION

(11) **EP 4 765 486 A1**
(43) Date of publication of application: **24.06.2026**
(21) Application number: 25161517.5
(22) Date of filing: 04.03.2025
(51) Int. Cl.: H01Q 1/32, H01Q 1/52

(54) **COMMUNICATION MODULE**

(30) Priority: 20.12.2024 CN 202411894637
(71) Applicant: Lite-On Technology Corporation, Taipei City 11492 (TW)
(72) Inventor: HSUEH, Yu-Ting, 11492 Taipei (TW)
(74) Representative: Becker, Eberhard

(57) **Abstract**

A communication module (100), adapted for an electric vehicle supply equipment, includes a circuit board (110), a wireless module (120), an antenna (130), an electronic component (140), a shielding component (150), and an adhesive material (160). The circuit board (110) has a surface (F). The wireless module (120) is disposed on the surface (F). The antenna (130) is electrically connected to the wireless module (120). The electronic component (140) is disposed on the surface (F) and electrically connected to the wireless module (120). The shielding component (150) is arranged on the surface (F) and has an accommodating space. The electronic component (140) is disposed in the accommodating space, and the wireless module (120) is located outside the accommodating space. The adhesive material (160) covers a periphery (P) of the shielding component (150).

## Description

### BACKGROUND

### Technical Field

The disclosure relates to a communication module, and in particular to a communication module adapted for electric vehicle supply equipment.

### Description of Related Art

As the electric vehicle (EV) market is experiencing rapid growth, the number of electric vehicle supply equipment (EVSE, also known as a charging station) is also increasing. The data transmission of electric vehicle supply equipment in terms of charging efficiency, user experience, and operation management, etc., is no longer limited to conventional wired transmission. There is also an increasing demand for wireless transmission by means of 4G LTE, Wi-Fi, and Bluetooth.

However, electric vehicle supply equipment generally includes many electronic components with various functions. The noises generated by these electronic components may easily result in interference to components used for wireless transmission, such as antennas and wireless modules. Therefore, an urgent need exists for a solution to effectively mitigate the impact of noise produced by electronic components on wireless transmission.

### SUMMARY

The disclosure is directed to a communication module that reduces the interference of noise on wireless transmission, thereby improving the performance of wireless transmission.

A communication module of the disclosure, adapted for an electric vehicle supply equipment, includes a circuit board, a wireless module, an antenna, an electronic component, a shielding component, and an adhesive material. The circuit board has a surface. The wireless module is disposed on the surface. The antenna is electrically connected to the wireless module. The electronic components are disposed on the surface, and one of the electronic components is electrically connected to the wireless module. The shielding component is arranged on the surface and has an accommodating space. The electronic component is disposed in the accommodating space, and the wireless module is located outside the accommodating space. The adhesive material covers a periphery of the shielding component.

In an embodiment of the disclosure, the adhesive material includes at least 3% metal particles.

In an embodiment of the disclosure, the adhesive material fills a gap between the shielding component and the circuit board.

In an embodiment of the disclosure, the shielding component includes a top plate and a plurality of sidewalls, and the plurality of sidewalls are respectively connected to a plurality of edges of the top plate.

In an embodiment of the disclosure, the communication module further includes a clamping element. The clamping element is disposed on the surface of the circuit board and clamps one of the plurality of sidewalls.

In an embodiment of the disclosure, the circuit board has a grounding terminal. The clamping element is disposed at the grounding terminal.

In an embodiment of the disclosure, the clamping element is welded to the surface of the circuit board.

In an embodiment of the disclosure, the shielding component has an opening.

In an embodiment of the disclosure, the electronic component includes a controller, a micro-processor unit, a micro-controller unit, a DDR memory device, an embedded Multi-Media Card (eMMC), a NAND memory device, a NOR memory device, an Ethernet chip, a trusted platform module (TPM) chip, or a power converter chip.

In summary, in the communication module of the disclosure, the shielding component is arranged on the circuit board and covers the electronic component on the circuit board and may moderately mask the noise generated by the electronic component. Furthermore, the gap between the shielding component and the circuit board is filled with the adhesive material. In other words, the accommodation space enclosed by the shielding component becomes a space with excellent isolation, making it difficult for the noise generated by the electronic component in the accommodation space to interfere the wireless module outside the accommodation space of the shielding component, thereby improving performance and stability for wireless transmission and enhancing user experience.

### BRIEF DESCRIPTION OF THE DRAWINGS

FIG. 1 is a schematic view of a communication module before applying an adhesive material according to an embodiment of the disclosure.
FIG. 2 is a schematic view of the communication module of FIG. 1 after applying the adhesive material.
FIG. 3 is a schematic view of the communication module of FIG. 1 with the shielding component removed.
FIG. 4 is a schematic view of the shielding component in FIG. 1 from another angle of view.

### DESCRIPTION OF THE EMBODIMENTS

Reference will now be made in detail to the exemplary embodiments of the disclosure, examples of which are illustrated in the accompanying drawings. Wherever possible, the same reference numerals are used in the drawings and descriptions to refer to the same or like parts.

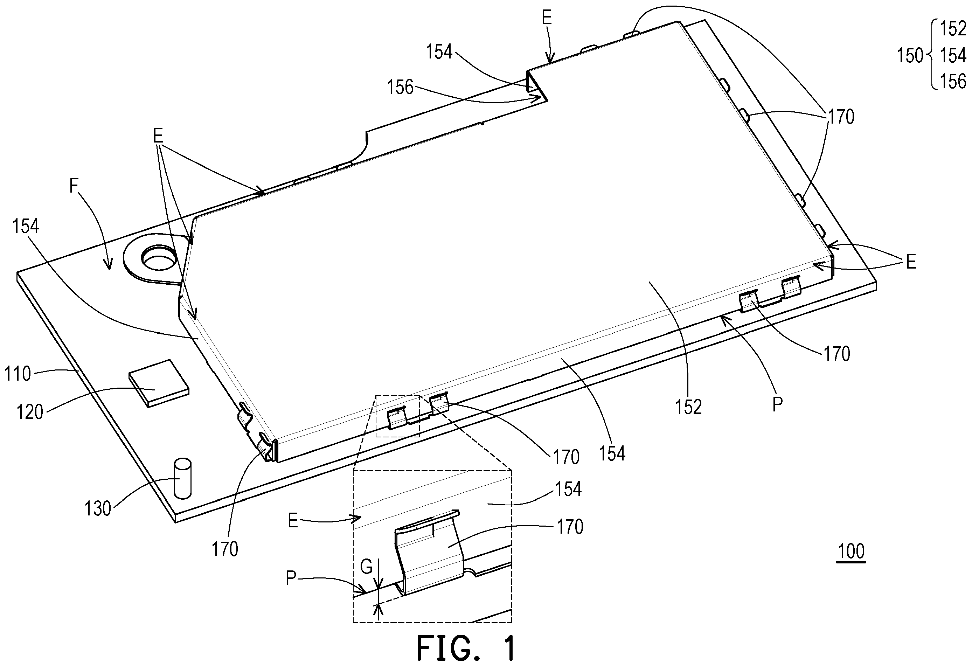

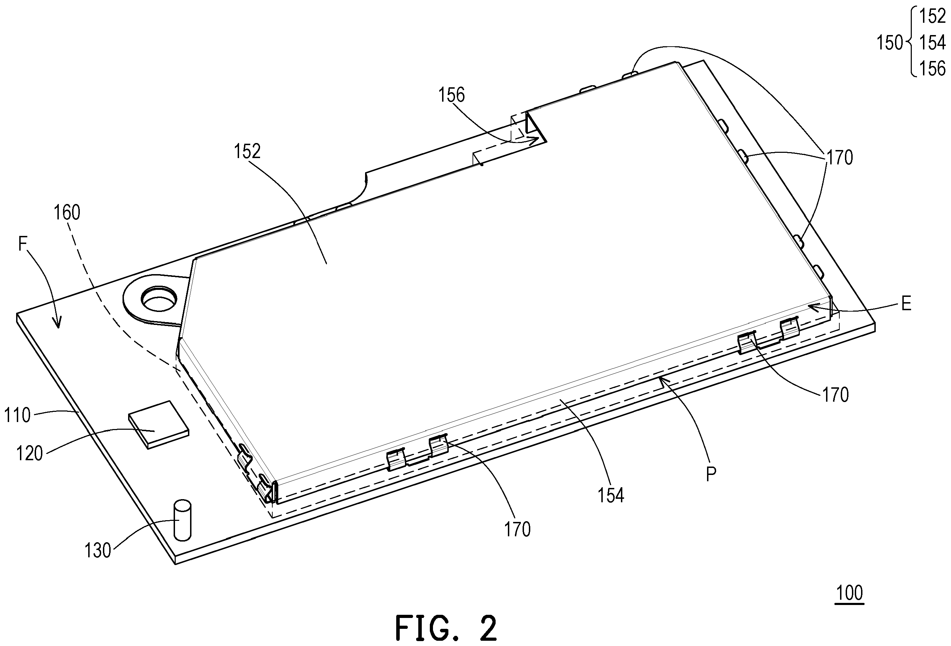

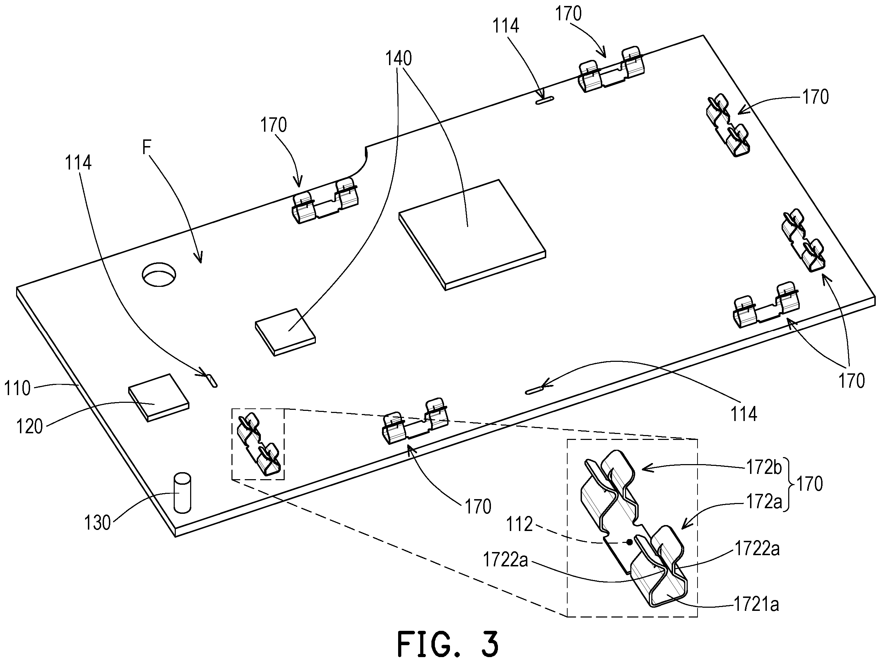

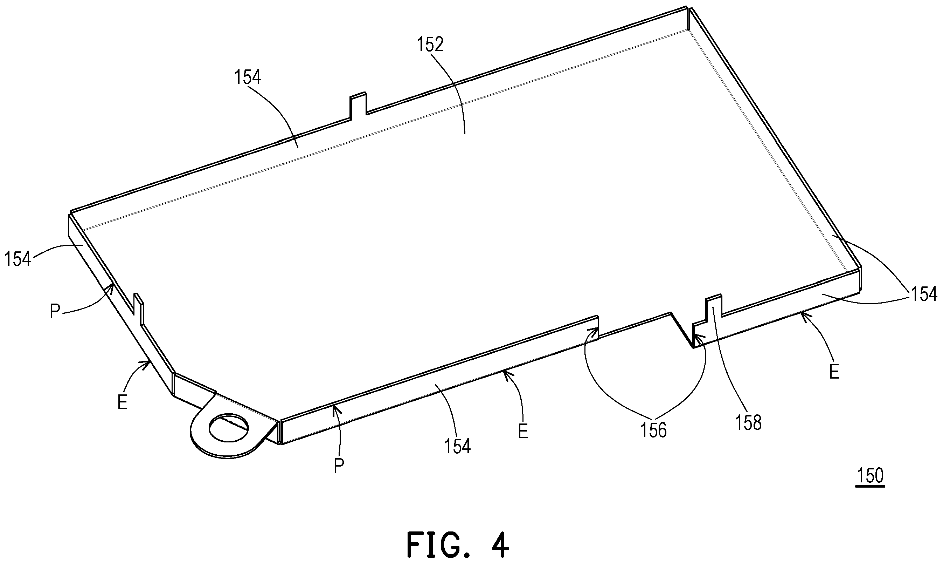

FIG. 1 is a schematic view of a communication module before applying an adhesive material according to an embodiment of the disclosure. FIG. 2 is a schematic view of the communication module of FIG. 1 after applying the adhesive material. FIG. 3 is a schematic view of the communication module of FIG. 1 with the shielding component removed. FIG. 4 is a schematic view of the shielding component in FIG. 1 from another angle of view.

Referring to FIG. 1 to FIG. 4, in this embodiment, the communication module 100 is adapted for electric vehicle supply equipment (EVSE, also known as a charging station) of an electric vehicle (EV), and may realize wireless transmission between the electric vehicle supply equipment and the external environment. Data from the electric vehicle supply equipment, such as charging efficiency, user experience, or operation management data, may be transmitted to the external environment through wireless transmission by the communication module 100 within the electric vehicle supply equipment, but the type of data transmitted is not limited thereto. The communication module 100 may perform wireless transmission by means of 4G LTE, Wi-Fi or Bluetooth, for example, but the type of wireless transmission by the communication module 100 is not limited thereto.

In this embodiment, the communication module 100 includes a circuit board 110, a wireless module 120, an antenna 130, an electronic component 140 (FIG. 3), a shielding component 150, and an adhesive material 160 (FIG. 2). The circuit board 110 has a surface F. The wireless module 120 and the antenna 130 are disposed on the surface F, and the antenna 130 is electrically connected to the wireless module 120. The wireless module 120 provides a function of wireless transmission, the antenna 130 may receive or transmit signals, and the communication module 100 may perform wireless transmission with the external environment through the wireless module 120 and the antenna 130.

The electronic component 140 is disposed on the surface F of the circuit board 110 and is electrically connected to the wireless module 120. The electronic component 140, for example, may control the wireless module 120 to perform wireless transmission. In this embodiment, the number of the electronic component 140 is not limited thereto. For example, the electronic component 140 may be one electronic component. The electronic components 140 may also be a plurality of electronic components.

The electronic component 140 may include a processor, a micro-processor unit (MPU), a micro-controller unit (MCU), a DDR memory device (DDR RAM), an embedded Multi-Media Card (eMMC), a NAND memory device, a NOR memory device, an Ethernet chip, a trusted platform module (TPM) chip, or a power converter chip, but the type of the electronic component 140 is not limited thereto.

Note that the wireless module 120, the antenna 130, and the electronic component 140 in FIGS. 1 to 3 are only a schematic illustration, and FIGS. 1 to 3 are not used to limit the shapes, sizes, and positions of the wireless module 120, the antenna 130 and the electronic component 140.

As illustrated in FIG. 3, the communication module 100 further includes a clamping element 170, and the clamping element 170 is disposed on the surface F of the circuit board 110. In some embodiments, the clamping element 170 is welded to the surface F of the circuit board 110, so that the clamping element 170 is securely fixed to the circuit board 110. In other embodiments, the clamping element 170 may be fixed to the circuit board 110 by gluing or other appropriate methods for fixation. In some embodiments, the circuit board 110 has a grounding terminal 112, and the clamping element 170 is disposed at the grounding terminal 112. The communication module 100 may include one clamping element 170 or a plurality of clamping elements 170.

Each of the clamping elements 170 includes two clamping portions 172a and 172b arranged side by side to increase the clamping force, but the number of clamping portions 172a and 172b is not limited thereto. Taking the clamping portion 172a as an example, the clamping portion 172a includes a fixing section 1721a and elastic sections 1722a connected to each other. The fixing section 1721a contacts and is fixed on the surface F of the circuit board 110. At least one portion of each of the elastic sections 1722a is close to each other and may clamp objects by an elastic force.

In the embodiment illustrated in FIG. 3, seven clamping elements 170 are presented, but the number of clamping elements 170 is not limited thereto.

Referring to both FIG. 4 and FIG. 3, the shielding component 150 is arranged on the surface F of the circuit board 110 and has an accommodation space. Specifically, the shielding component 150 has positioning portions 158 extending toward the circuit board 110, and the positioning portions 158 may be inserted into positioning holes 114 on the surface F of the circuit board 110.

The shielding component 150 is made of metal to mask signals. The shielding component 150 includes a top plate 152 and a plurality of sidewalls 154. These sidewalls 154 are respectively connected to a plurality of edges E of the top plate 152 to form the accommodation space.

The shielding component 150 is, for example, a box-shaped structure, but the shape of the shielding component 150 is not limited thereto. In some embodiments, the shielding component 150 has an opening 156, and the wires of the electronic component 140 may be connected to other electronic components on the circuit board 110 or electronic devices in the electric vehicle supply equipment through the opening 156.

Referring to FIG. 1 and FIG. 3, when the shielding component 150 is disposed on the surface F of the circuit board 110, the shielding component 150 may be clamped by the clamping element 170. Specifically, the sidewall 154 of the shielding component 150 may be clamped by the elastic sections 1722a of the clamping portions 172a and 172b, so as to securely fix the shielding component 150 to the circuit board 110.

When the shielding component 150 is disposed on the surface F of the circuit board 110, the electronic component 140 is disposed in the accommodating space, and the wireless module 120 and antenna 130 are located outside the accommodating space. The shielding component 150 covers the electronic component 140 on the circuit board 110, so it may moderately mask the noise generated by the electronic component 140 and reduce its interference with the wireless module 120.

Note that the electronic component 140 covered by the shielding component 150 may be an electronic component that significantly interferes with the wireless module 120, and other electronic components with minor noise may still be arranged outside the accommodation space of the shielding component 150. In some embodiments, the communication module 100 may include a plurality of shielding components 150 respectively covering various electronic components 140 on the circuit board 110.

Referring to FIG. 1 and FIG. 2, in this embodiment, the adhesive material 160 covers the periphery P of the shielding component 150. In some embodiments, the adhesive material 160 fills the gaps G between the shielding component 150 and the circuit board 110. Generally speaking, when the shielding component 150 is disposed on the circuit board 110, the shielding component 150 and the circuit board 110 are not completely closed. The gaps G such as an opening or a slit may exist between the sidewalls 154 of the shielding component 150 and the surface F of the circuit board 110. In other words, the accommodation space of the shielding component 150 is not a completely airtight space, thus having poor isolation, and the noise generated by the electronic component 140 in the accommodation space can still propagate to the outside of the shielding component 150, thereby interfering with the wireless module 120 and resulting in poor wireless transmission.

In contrast, in this embodiment, the communication module 100 fills these gaps G with the adhesive material 160, forming a space with excellent isolation inside the shielding component 150, making it difficult for the electronic component 140 in the shielding component 150 to interfere with the wireless module 120, thereby improving performance and stability for wireless transmission and enhancing user experience and satisfaction.

In this embodiment, the adhesive material 160 includes at least 3% of metal particles, such as iron, cobalt or nickel particles, but the type of metal particles is not limited thereto. In actual tests, good signal shielding is achieved when the proportion of metal particles in the adhesive material 160 reaches 3%. In addition, the adhesive material 160 functions stably under various environmental conditions, making it suitable for a broad spectrum of working environments.

In this embodiment, after the shielding component 150 is arranged on the surface F of the circuit board 110, the adhesive material 160 fills the gaps G between the shielding component 150 and the circuit board 110. In detail, the adhesive material 160 fills the gaps G by, for example, dispensing, but the method of applying the adhesive material 160 is not limited thereto. The height and thickness of the adhesive material 160 may be adjusted according to the sizes of the gaps G.

In a preferred embodiment, the adhesive material 160 covers the periphery P of the shielding component 150, so as to ensure the inside of the shielding component 150 isolated from the external environment and to prevent noise generated by the electronic component 140 in the shielding component 150 from escaping to the external environment, resulting in interference to the wireless transmission of the wireless module 120. In other embodiments, the adhesive material 160 may be applied only to the visually discernible gaps G for cost saving.

Additionally, in some embodiments, the adhesive material 160 may cover a portion of clamping element 170 exposed from the gap G. In other embodiments, the adhesive material 160 does not cover clamping element 170.

In summary, in the communication module of the disclosure, the shielding component is arranged on the circuit board and covers the electronic component on the circuit board and may moderately mask the noise generated by the electronic component. Furthermore, the gap between the shielding component and the circuit board is filled with the adhesive material. In other words, the accommodation space enclosed by the shielding component becomes a space with excellent isolation, making it difficult for the noise generated by the electronic component in the accommodation space to interfere the wireless module outside the accommodation space of the shielding component, thereby improving performance and stability for wireless transmission and enhancing user experience.

In addition, the adhesive material includes at least 3% metal particles, which results in good signal shielding. Meanwhile, the adhesive material functions stably under various environmental conditions, making it suitable to a broad spectrum of working environments.

## Claims

1. A communication module (100), adapted for an electric vehicle supply equipment and comprising:
a circuit board (110), having a surface (F);
a wireless module (120), disposed on the surface (F);
an antenna (130), electrically connected to the wireless module (120);
an electronic component (140), disposed on the surface (F) and electrically connected to the wireless module (120);
a shielding component (150), arranged on the surface (F) and having an accommodating space, wherein the electronic component (140) is disposed in the accommodating space, and the wireless module (120) is located outside the accommodating space; and
an adhesive material (160), covering a periphery (P) of the shielding component (150).

2. The communication module (100) according to claim 1, wherein the adhesive material (160) comprises at least 3% metal particles.

3. The communication module (100) according to claim 1, wherein the adhesive material (160) fills a gap (G) between the shielding component (150) and the circuit board (110).

4. The communication module (100) according to claim 1, wherein the shielding component (150) comprises a top plate (152) and a plurality of sidewalls (154), and the plurality of sidewalls (154) are respectively connected to a plurality of edges (E) of the top plate (152).

5. The communication module (100) according to claim 4, further comprising a clamping element (170), wherein the clamping element (170) is disposed on the surface (F) of the circuit board (110) and clamps one of the plurality of sidewalls (154).

6. The communication module (100) according to claim 5, wherein the circuit board (110) has a grounding terminal (112), and the clamping element (170) is disposed at the grounding terminal (112).

7. The communication module according to claim 5, wherein the clamping element (170) is welded to the surface (F) of the circuit board (110).

8. The communication module (100) according to claim 1, wherein the shielding component (150) has an opening (156).

9. The communication module (100) according to claim 1, wherein the electronic component (140) comprises a controller, a micro-processor unit, a micro-controller unit, a DDR memory device, an embedded Multi-Media Card (eMMC), a NAND memory device, a NOR memory device, an Ethernet chip, a trusted platform module (TPM) chip, or a power converter chip.

## Amended claims

### Amended claims in accordance with Rule 137(2) EPC.

1. A communication module (100), adapted for an electric vehicle supply equipment and comprising:
a circuit board (110), having a surface (F);
a wireless module (120), disposed on the surface (F);
an antenna (130), electrically connected to the wireless module (120);
an electronic component (140), disposed on the surface (F) and electrically connected to the wireless module (120);
a shielding component (150), arranged on the surface (F) and having an accommodating space, wherein the electronic component (140) is disposed in the accommodating space, and the wireless module (120) is located outside the accommodating space; and
an adhesive material (160), covering a periphery (P) of the shielding component (150),
wherein the shielding component (150) comprises a top plate (152) and a plurality of sidewalls (154), and the plurality of sidewalls (154) are respectively connected to a plurality of edges (E) of the top plate (152),
the communication module (100) further comprises a clamping element (170), and the clamping element (170) is disposed on the surface (F) of the circuit board (110) and clamps one of the plurality of sidewalls (154),
the circuit board (110) has a grounding terminal (112), and the clamping element (170) is disposed at the grounding terminal (112).

2. The communication module (100) according to claim 1, wherein the adhesive material (160) comprises at least 3% metal particles.

3. The communication module (100) according to claim 1, wherein the adhesive material (160) fills a gap (G) between the shielding component (150) and the circuit board (110).

4. The communication module according to claim 1, wherein the clamping element (170) is welded to the surface (F) of the circuit board (110).

5. The communication module (100) according to claim 1, wherein the shielding component (150) has an opening (156).

6. The communication module (100) according to claim 1, wherein the electronic component (140) comprises a controller, a micro-processor unit, a micro-controller unit, a DDR memory device, an embedded Multi-Media Card, a NAND memory device, a NOR memory device, an Ethernet chip, a trusted platform module chip, or a power converter chip.
